# EUROPEAN PATENT SPECIFICATION

(11) **EP 3 479 650 B1**
(45) Date of publication and mention of the grant of the patent: **29.01.2020**
(21) Application number: 17730475.5
(22) Date of filing: 15.06.2017
(51) Int. Cl.: H05B 1/02, H05B 3/68, H05B 6/06

(54) **TEMPERATURE MEASURING DEVICE, COOKING APPARATUS AND COOKING SYSTEM**
TEMPERATURMESSVORRICHTUNG, KOCHVORRICHTUNG UND KOCHSYSTEM
DISPOSITIF DE MESURE DE TEMPÉRATURE, APPAREIL DE CUISSON ET SYSTÈME DE CUISSON

(30) Priority: 04.07.2016 ES 201630907
(43) Date of publication of application: 08.05.2019
(73) Proprietor: Copreci, S.Coop., 20550 Aretxabaleta (ES)
(72) Inventor: MUGICA ODRIOZOLA, Jose Ignacio, 20570 Bergara (ES); ZABALO BAYON, Aitor, 20500 Arrasate (ES); QUEREJETA ANDUEZA, Felix, 64700 Hendaye (FR)
(74) Representative: Igartua, Ismael
(86) International application number: PCT/EP2017/064691
(87) International publication number: WO 2018/007122

(56) References cited:
- EP-A1- 2 945 460
- EP-A2- 2 005 796
- US-A1- 2009 194 526
- US-A1- 2010 190 436

## Description

### TECHNICAL FIELD

The present invention relates to a temperature measuring device, a cooking apparatus, and a cooking system.

### PRIOR ART

The possibility of knowing the cooking temperature of a food and/or of the cooking medium of a food allows cooking said food in an optimal manner.

Cooking systems comprising a measuring device for measuring a cooking temperature are known. For example, EP2945460A1 discloses a cooking system comprising a cooking apparatus with a plurality of cooking zones and a controller. The cooking system also comprises a temperature sensor. The temperature sensor transmits the cooking temperature to the controller of the cooking apparatus. The controller can thereby adjust the power of the cooking zone in question. Communication between the temperature sensor and the cooking apparatus can be through wireless technology.

US2009/194526A1 discloses a cooking system comprising a cooking apparatus comprising at least one cooking zone, and a temperature measuring device comprising at least one temperature sensor for measuring a cooking temperature. The cooking apparatus and the measuring device comprise wireless transmission means for transmitting the temperature measured by the temperature sensor of the measuring device to the cooking apparatus. The transmission means comprise an RFID reader/writer coupler arranged in the cooking apparatus and an RFID tag arranged in the measuring device.

### DISCLOSURE OF THE INVENTION

The object of the invention is to provide a temperature measuring device, a cooking apparatus, and a cooking system, as defined in the claims.

A first aspect of the invention relates to a temperature measuring device comprising at least one temperature sensor for measuring a cooking temperature and wireless transmission means for transmitting the temperature measured by said at least one temperature sensor to a cooking apparatus.

The transmission means comprise a passive communication unit configured for communicating with an active communication unit of the cooking apparatus, the active communication unit generating an electromagnetic field for feeding said passive communication unit, such that as a result of said electromagnetic field the measuring device can measure the cooking temperature and transmit it to the cooking apparatus.

The measuring device comprises positioning means configured for aligning the passive communication unit with respect to the active communication unit of the cooking apparatus, such that the passive communication unit of the measuring device is assured to be aligned with the active communication unit of the cooking apparatus. The positioning means comprise at least one magnet, the cooking apparatus comprising means attracting said magnet, such that the passive communication unit is aligned with the active communication unit of the cooking apparatus when both communication units approach to one another.

A second aspect of the invention relates to a cooking apparatus comprising at least one cooking zone and wireless transmission means for receiving the temperature measured by a measuring device comprising at least one temperature sensor.

The transmission means comprise an active communication unit arranged inside the cooking apparatus, configured for communicating with a passive communication unit of the measuring device, the active communication unit generating an electromagnetic field for feeding said passive communication unit, such that as a result of said electromagnetic field the measuring device can measure the cooking temperature and transmit it to the cooking apparatus.

The cooking apparatus comprises positioning means configured for aligning the passive communication unit of the measuring device with respect to the active communication unit of the cooking apparatus, such that the passive communication unit of the measuring device is assured to be aligned with the active communication unit of the cooking apparatus. The positioning means comprise at least one magnet, the measuring device comprising means attracting said magnet, such that the passive communication unit of the measuring device is aligned with the active communication unit of the cooking apparatus when both communication units approach to one another.

A third aspect of the invention relates to a cooking system comprising a cooking apparatus and a temperature measuring device such as those described above.

Given that the measuring device is fed by the electromagnetic field generated by the active communication unit of the cooking apparatus, the measuring device of the invention does not require any type of battery or connection to a power source to measure the cooking temperature or to transmit said cooking temperature.

These and other advantages and features of the invention will become evident in view of the drawings and the detailed description of the invention.

### DESCRIPTION OF THE DRAWINGS

Figure 1 shows a perspective view of the cooking system according to an embodiment of the invention, the measuring device being separate from the cooking apparatus.
Figure 2 is a perspective view of the cooking system of Figure 1, wherein the measuring device is arranged in the contact area of the cooking apparatus.
Figure 3 is a partial cross-section view of the cooking system of Figure 1, wherein the measuring device is arranged in the contact area of the cooking apparatus.
Figure 4 is a detailed view of Figure 3.
Figure 5 is a perspective view of the measuring device of Figure 1.
Figure 6 is a cross-section view of the measuring device of Figure 1.

### DETAILED DISCLOSURE OF THE INVENTION

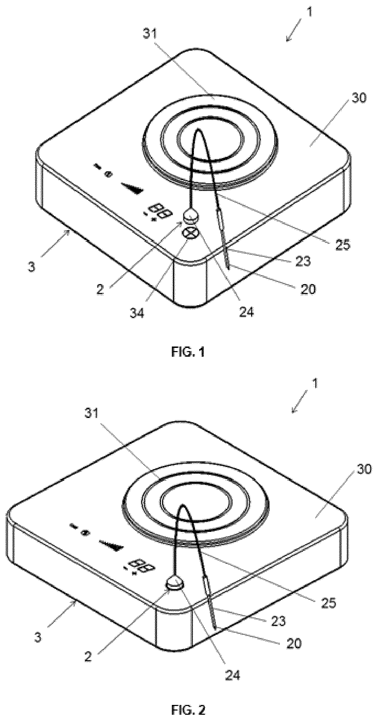

Figures 1 and 2 show an embodiment of the cooking system 1 according to the invention.

The cooking system 1 comprises a cooking apparatus 3 comprising a cooking zone 31. The cooking apparatus can be of any type known by the person skilled in the art, for example an induction cooktop, a glass ceramic cooktop or a gas cooking apparatus or a barbecue. In the embodiment shown in the drawings, the cooking apparatus 3 is a portable induction cooktop comprising a single cooking zone. In other embodiments, the cooking apparatus can comprise a plurality of cooking zones.

The cooking system 1 also comprises a temperature measuring device 2 comprising a temperature sensor 20 for measuring a cooking temperature. The cooking temperature can refer to the temperature of a food that is being cooked or to the medium in which said food is being cooked. For example, the sensor can be arranged inside a piece of meat that is being cooked in order to cook the meat to the desired point of doneness, but it also can be arranged in the oil in which a food is being fried so that the temperature of the oil is maintained at the optimal temperature. Preferably, the type of sensor used is a resistive temperature detector, for example a PT 100. This type of sensor comprises a resistance the value of which varies depending on temperature. In this embodiment, the temperature sensor 20 is arranged in a needle-shaped carrier 23. The needle shape of the carrier 23 makes the possibility of introducing the temperature sensor 20 into the food that is being cooked easier.

In other possible embodiments, the measuring device can comprise more than one temperature sensor, for example it can comprise two temperature sensors, such that a first sensor can measure the temperature of the food that is being cooked, and a second sensor can measure the cooking temperature of the medium in which said food is being cooked.

The cooking apparatus 3 and the measuring device 2 comprise wireless transmission means for transmitting the cooking temperature measured by the temperature sensor 20 of the measuring device 2 to the cooking apparatus 3.

The transmission means comprise an active communication unit 32 arranged inside the cooking apparatus 3 and a passive communication unit 21 arranged in the measuring device 2, both communication units being configured for communicating with one another, the active communication unit 32 generating an electromagnetic field for feeding the passive communication unit 21, such that as a result of said electromagnetic field, the measuring device 2 can measure the cooking temperature and transmit it to the cooking apparatus 3.

The measuring device therefore does not require any type of battery or any connection to a power source to measure the cooking temperature or to transmit said cooking temperature. For measuring the cooking temperature and transmitting said cooking temperature to the cooking apparatus, the measuring device is fed by the electromagnetic field generated by the active communication unit of the cooking apparatus.

Preferably, the technology used by the transmission means is near field communication (NFC) technology. Therefore, the active communication unit 32 is an active NFC antenna and the passive communication unit 21 is a passive NFC antenna. The person skilled in the art knows that according to ISO 14443, NFC is performed by means of induction in a magnetic field, wherein two spiral antennas are placed within their respective near fields. One of the NFC operating modes is passive communication and it is what is preferably used in this invention. In passive NFC, only one device, in this case the active communication unit 32, generates the electromagnetic field and the other one, in this case the passive communication unit 21, uses the load modulation to transfer the data. The communication initiator is in charge of generating the electromagnetic field.

In other embodiments, the transmission means can use other technologies known by the person skilled in the art, provided that the active communication unit can feed the measuring device.

The cooking system 1 comprises positioning means configured for aligning the passive communication unit 21 with respect to the active communication unit 32, such that the passive communication unit 21 is assured to be aligned with the active communication unit 32. It is important for the passive communication unit 21 to be aligned with the active communication unit 32, since NFC technology requires both communication units to be arranged close to one another so that communication is correct.

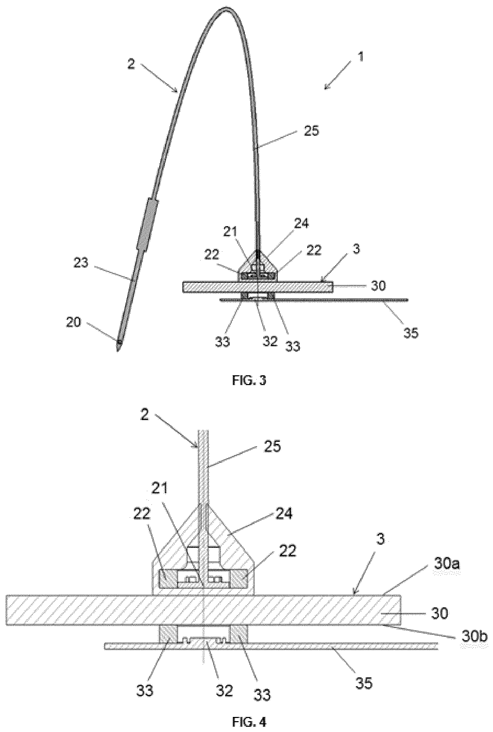

The positioning means comprise magnetic means arranged in the cooking apparatus 3 and in the measuring device 2, such that the passive communication unit 21 of the measuring device 2 is aligned with the active communication unit 32 of the cooking apparatus 3 when both communication units approach to one another, as observed in Figures 3 and 4.

In this embodiment, the positioning means of the cooking apparatus 3 comprise a ring-shaped magnet 33, the active communication unit 32 being arranged in the center of said ring-shaped magnet 33, and the positioning means of the measuring device 2 comprise a ring-shaped magnet 22, the passive communication unit 21 being arranged in the center of said ring-shaped magnet 22.

As described above, in this embodiment the cooking apparatus 3 is a portable induction cooktop. The induction cooktop comprises a hotplate 30 where the cooking zone 31 is arranged. The assembly formed by the magnet 33 of the cooking apparatus 3 and the active communication unit 32 are likewise arranged in the lower part 30b of said hotplate 30. A marked reading area 34a is defined in the upper part 30a of the hotplate 30. The reading area 34 corresponds with the location of the active communication unit 32 and the magnet 33. No element needs to be added to the upper part 30a of the hotplate 30, as indicating the location of the reading area 34 by means of a marking, for example, is enough, so the hotplate 30 is flat on the entire upper part 30a, an easy-to-clean solution being obtained.

In other embodiments, the positioning means of both the cooking apparatus and the measuring device can comprise a magnet with another geometrical shape or a plurality of magnets, provided that they perform the function of the passive communication unit of the measuring device being aligned with the active communication unit of the cooking apparatus when both communication units approach to one another. In these embodiments, the active communication unit as well as the passive communication unit could be located in the area of said magnet or magnets.

In another possible embodiment, the positioning means of the cooking apparatus can be replaced with a ferromagnetic element cooperating with the magnet of the measuring device.

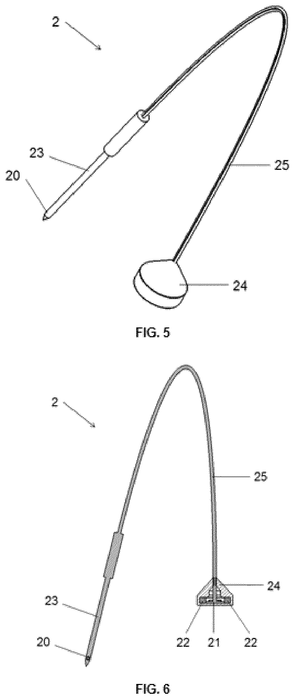

The measuring device 2 of this embodiment, shown in detail in Figures 5 and 6, comprises a body injected over the passive communication unit 21, the injected body 24 encasing the passive communication unit 21. In this embodiment, the body 24 also encases the magnet 22 of the measuring device 2 and a treatment circuit, not shown in the drawings, adapting the signals between a temperature sensor 20 and the passive communication unit 21. The body 24 is connected to the temperature sensor 20 by means of a cable 25. A completely leak-tight measuring device 2 is obtained by injecting the body 24 onto the mentioned elements, such that it can be washed in a dishwasher without any problem.

In this embodiment, the active communication unit 32 is arranged on the control plate 35 of the cooking apparatus 3. The active communication unit 32 communicates the temperature measured by means of the measuring device 2 to the control plate 35 of the cooking apparatus 3. The control plate 35 can, for example, thereby adapt the power of the corresponding cooking zone 31 so that the cooking temperature is kept constant, or it can give off an alarm when the cooking temperature reaches a given cooking temperature.

## Claims

1. Temperature measuring device comprising at least one temperature sensor (20) for measuring a cooking temperature, and wireless transmission means for transmitting the temperature measured by said at least one temperature sensor (20) to a cooking apparatus (3), wherein the transmission means comprise a passive communication unit (21) configured for communicating with an active communication unit (32) of the cooking apparatus (3), the active communication unit (32) generating an electromagnetic field for feeding said passive communication unit (21), such that as a result of said electromagnetic field the measuring device (2) can measure the cooking temperature and transmit it to the cooking apparatus (3), **characterized in that** the measuring device (2) comprises positioning means configured for aligning the passive communication unit (21) with respect to the active communication unit (32) of the cooking apparatus (3), such that the passive communication unit (21) of the measuring device (2) is assured to be aligned with the active communication unit (32) of the cooking apparatus (3), wherein the positioning means comprise at least one magnet (22), the cooking apparatus (3) comprising means attracting said magnet, such that the passive communication unit (21) is aligned with the active communication unit (32) of the cooking apparatus (3) when both communication units approach to one another.

2. Measuring device according to claim 1, wherein the passive communication unit (21) is a passive NFC antenna.

3. Measuring device according to claim 1 or 2, wherein the positioning means comprise a ring-shaped magnet (22), the passive communication unit (21) being arranged in the center of said ring-shaped magnet (22).

4. Measuring device according to any of the preceding claims, comprising a body injected over the passive communication unit (21), the injected body (24) encasing the passive communication unit (21) and said body (24) being connected to the temperature sensor (20) by means of a cable (25).

5. Cooking apparatus comprising at least one cooking zone (31), and wireless transmission means for receiving the temperature measured by a measuring device (2) comprising at least one temperature sensor (20), wherein the transmission means comprise an active communication unit (32) arranged in the cooking apparatus (3) configured for communicating with a passive communication unit (21) of the measuring device (2), the active communication unit (32) generating an electromagnetic field for feeding said passive communication unit (21), such that as a result of said electromagnetic field the measuring device (2) can measure the cooking temperature and transmit it to the cooking apparatus (3), **characterized in that** the cooking apparatus (3) comprises positioning means configured for aligning the passive communication unit (21) of the measuring device (2) with respect to the active communication unit (32) of the cooking apparatus (3), such that the passive communication unit (21) of the measuring device (2) is assured to be aligned with the active communication unit (32) of the cooking apparatus (3), wherein the positioning means comprise at least one magnet (33), the measuring device (2) comprising means attracting said magnet (33), such that the passive communication unit (21) of the measuring device (2) is aligned with the active communication unit (32) of the cooking apparatus (3) when both communication units approach to one another.

6. Cooking apparatus according to claim 5, wherein the active communication unit (32) is an active NFC antenna.

7. Cooking apparatus according to claim 5 or 6, wherein the positioning means comprise a ring-shaped magnet (33), the active communication unit (32) being arranged in the center of said ring-shaped magnet (33),

8. Cooking apparatus according to any of claims 5 to 7, wherein the cooking apparatus (3) is a hob comprising a hotplate (30), the positioning means and the active communication unit (32) being arranged in the lower part (30b) of said hotplate (30).

9. Cooking system comprising a cooking apparatus (3) comprising at least one cooking zone (31), and a temperature measuring device (2) comprising at least one temperature sensor (20) for measuring a cooking temperature, said cooking apparatus (3) and said measuring device (2) comprising wireless transmission means for transmitting the temperature measured by said at least one temperature sensor (20) of the measuring device (2) to the cooking apparatus (3), wherein the transmission means comprise an active communication unit (32) arranged in the cooking apparatus (3) and a passive communication unit (21) arranged in the measuring device (2), both communication units being configured for communicating with one another, the active communication unit (32) generating an electromagnetic field for feeding the passive communication unit (21), such that as a result of said electromagnetic field the measuring device (2) can measure the cooking temperature and transmit it to the cooking apparatus (3), **characterized in that** the cooking system (1) comprises positioning means configured for aligning the passive communication unit (21) with respect to the active communication unit (32), such that the passive communication unit (21) is assured to be aligned with the active communication unit (32), wherein the positioning means comprise magnetic means arranged in the cooking apparatus (3) and in the measuring device (2), such that the passive communication unit (21) of the measuring device (2) is aligned with the active communication unit (32) of the cooking apparatus (3) when both communication units approach to one another, the positioning means comprising at least one magnet (33) arranged in the cooking apparatus (3) and at least one magnet (22) arranged in the measuring device (2).

10. Cooking system according to claim 9, wherein the active communication unit (32) is an active NFC antenna and the passive communication unit (21) is a passive NFC antenna.

11. Cooking system according to claim 9 or 10, wherein the positioning means of the cooking apparatus (3) comprise a ring-shaped magnet (33), the active communication unit (32) being arranged in the center of said ring-shaped magnet (33), and the positioning means of the measuring device (2) comprise a ring-shaped magnet (22), the passive communication unit (21) being arranged in the center of said ring-shaped magnet (22).

## Patentansprüche

1. Temperaturmessvorrichtung mit mindestens einem Temperatursensor (20) zum Messen einer Kochtemperatur und drahtlosen Übertragungsmitteln zum Übertragen der von dem mindestens einen genannten Temperatursensor (20) gemessenen Temperatur an eine Kochvorrichtung (3), wobei die Übertragungsmittel eine passive Kommunikationseinheit (21) umfassen, die zum Kommunizieren mit einer aktiven Kommunikationseinheit (32) der Kochvorrichtung (3) ausgelegt ist, wobei die aktive Kommunikationseinheit (32) ein elektromagnetisches Feld zum Speisen der genannten passiven Kommunikationseinheit (21) erzeugt, sodass die Messvorrichtung (2) aufgrund des genannten elektromagnetischen Feldes die Kochtemperatur messen und an die Kochvorrichtung (3) übertragen kann, **dadurch gekennzeichnet, dass** die Messvorrichtung (2) Positioniermittel umfasst, die zum Ausrichten der passiven Kommunikationseinheit (21) in Bezug auf die aktive Kommunikationseinheit (32) der Kochvorrichtung (3) ausgebildet sind, sodass gewährleistet ist, dass die passive Kommunikationseinheit (21) der Messvorrichtung (2) auf die aktive Kommunikationseinheit (32) der Kochvorrichtung (3) ausgerichtet ist, wobei die Positioniermittel mindestens einen Magneten (22) umfassen, wobei die Kochvorrichtung (3) Mittel umfasst, die den genannten Magneten anziehen, sodass die passive Kommunikationseinheit (21) auf die aktive Kommunikationseinheit (32) der Kochvorrichtung (3) ausgerichtet ist, wenn die beiden Kommunikationseinheiten miteinander in Kontakt treten.

2. Messvorrichtung nach Anspruch 1, wobei die passive Kommunikationseinheit (21) eine passive NFC-Antenne ist.

3. Messvorrichtung nach Anspruch 1 oder 2, wobei die Positioniermittel einen ringförmigen Magneten (22) umfassen und die passive Kommunikationseinheit (21) in der Mitte des genannten ringförmigen Magneten (22) angeordnet ist.

4. Messvorrichtung nach einem der vorstehenden Ansprüche, umfassend einen Körper, mit dem die passive Kommunikationseinheit (21) überspritzt ist, wobei der übergespritzte Körper (24) die passive Kommunikationseinheit (21) umschließt und der genannten Körper (24) über ein Kabel (25) mit dem Temperatursensor (20) verbunden ist.

5. Kochvorrichtung mit mindestens einem Kochbereich (31) und drahtlosen Übertragungsmitteln zum Empfangen der von einer Messvorrichtung (2) mit mindestens einem Temperatursensor (20) gemessenen Temperatur, wobei die Übertragungsmittel eine in der Kochvorrichtung (3) angeordnete aktive Kommunikationseinheit (32) umfassen, die zur Kommunikation mit einer passiven Kommunikationseinheit (21) der Messvorrichtung (2) ausgelegt ist, wobei die aktive Kommunikationseinheit (32) ein elektromagnetisches Feld zum Speisen der genannten passiven Kommunikationseinheit (21) erzeugt, sodass die Messvorrichtung (2) aufgrund des genannten elektromagnetischen Feldes die Kochtemperatur messen und an die Kochvorrichtung (3) übertragen kann, **dadurch gekennzeichnet, dass** die Kochvorrichtung (3) Positioniermittel umfasst, die zum Ausrichten der passiven Kommunikationseinheit (21) in Bezug auf die aktive Kommunikationseinheit (32) der Kochvorrichtung (3) ausgebildet sind, sodass gewährleistet ist, dass die passive Kommunikationseinheit (21) der Messvorrichtung (2) auf die aktive Kommunikationseinheit der Kochvorrichtung (3) ausgerichtet ist, wobei die Positioniermittel mindestens einen Magneten (33) umfassen, wobei die Messvorrichtung (2) Mittel umfasst, die den genannten Magneten (33) anziehen, sodass die passive Kommunikationseinheit (21) der Messvorrichtung (2) auf die aktive Kommunikationseinheit (32) der Kochvorrichtung (3) ausgerichtet ist, wenn die beiden Kommunikationseinheiten miteinander in Kontakt treten.

6. Kochvorrichtung nach Anspruch 5, wobei die aktive Kommunikationseinheit (32) eine aktive NFC-Antenne ist.

7. Kochvorrichtung nach Anspruch 5 oder 6, wobei die Positioniermittel einen ringförmigen Magneten (33) umfassen und die aktive Kommunikationseinheit (32) in der Mitte des genannten ringförmigen Magneten (33) angeordnet ist.

8. Kochvorrichtung nach einem der Ansprüche 5 bis 7, wobei die Kochvorrichtung (3) eine Kochfläche mit einer Kochplatte (30) ist, wobei die Positioniermittel und die aktive Kommunikationseinheit (32) im unteren Teil (30b) der genannten Kochplatte (30) angeordnet sind.

9. Kochsystem umfassend eine Kochvorrichtung (3) mit mindestens einem Kochbereich (31) und eine Temperaturmessvorrichtung (2) mit mindestens einem Temperatursensor (20) zum Messen einer Kochtemperatur, wobei die genannte Kochvorrichtung (3) und die genannte Messvorrichtung (2) drahtlose Übertragungsmittel zum Übertragen der von dem genannten, mindestens einen Temperatursensor (20) der Messvorrichtung (2) gemessenen Temperatur an die Kochvorrichtung (3) umfassen, wobei die Übertragungsmittel eine aktive Kommunikationseinheit (32), die in der Kochvorrichtung (3) angeordnet ist, und eine passive Kommunikationseinheit (21), die in der Messvorrichtung (2) angeordnet ist, umfassen, wobei die beiden Kommunikationseinheiten zum Kommunizieren miteinander ausgelegt sind, wobei die aktive Kommunikationseinheit (32) ein elektromagnetisches Feld zum Speisen der passiven Kommunikationseinheit (21) erzeugt, sodass die Messvorrichtung (2) aufgrund des genannten elektromagnetischen Feldes die Kochtemperatur messen und an die Kochvorrichtung (3) übertragen kann, **dadurch gekennzeichnet, dass** das Kochsystem (1) Positioniermittel umfasst, die zum Ausrichten der passiven Kommunikationseinheit (21) in Bezug auf die aktive Kommunikationseinheit (32) ausgebildet sind, sodass gewährleistet ist, dass die passive Kommunikationseinheit (21) auf die aktive Kommunikationseinheit (32) ausgerichtet ist, wobei die Positioniermittel in der Kochvorrichtung (3) und in der Messvorrichtung (2) angeordnete Magnetmittel umfassen, sodass die passive Kommunikationseinheit (21) der Messvorrichtung (2) auf die aktive Kommunikationseinheit (32) der Kochvorrichtung (3) ausgerichtet ist, wenn die beiden Kommunikationseinheiten miteinander in Kontakt treten, wobei die Positioniermittel mindestens einen in der Kochvorrichtung (3) angeordneten Magneten (33) und mindestens einen in der Messvorrichtung (2) angeordneten Magneten (22) umfassen.

10. Kochsystem nach Anspruch 9, wobei die aktive Kommunikationseinheit (32) eine aktive NFC-Antenne und die passive Kommunikationseinheit (21) eine passive NFC-Antenne ist.

11. Kochsystem nach Anspruch 9 oder 10, wobei die Positioniermittel der Kochvorrichtung (3) einen ringförmigen Magneten (33) umfassen und die aktive Kommunikationseinheit (32) in der Mitte des genannten ringförmigen Magneten (33) angeordnet ist, und wobei die Positioniermittel der Messvorrichtung (2) einen ringförmigen Magneten (22) umfassen und die passive Kommunikationseinheit (21) in der Mitte des genannten ringförmigen Magneten (22) angeordnet ist.

## Revendications

1. Dispositif de mesure de température comprenant au moins un capteur de température (20) pour mesurer une température de cuisson, et des moyens de transmission sans fil pour transmettre la température mesurée par ledit au moins un capteur de température (20) à un appareil de cuisson (3), dans lequel les moyens de transmission comprennent une unité de communication passive (21) configurée pour communiquer avec une unité de communication active (32) de l'appareil de cuisson (3), l'unité de communication active (32) produisant un champ électromagnétique pour alimenter ladite unité de communication passive (21), de sorte qu'en conséquence dudit champ électromagnétique le dispositif de mesure (2) peut mesurer la température de cuisson et la transmettre à l'appareil de cuisson (3), **caractérisé en ce que** le dispositif de mesure (2) comprend des moyens de positionnement configurés pour aligner l'unité de communication passive (21) par rapport à l'unité de communication active (32) de l'appareil de cuisson (3), de sorte à assurer que l'unité de communication passive (21) du dispositif de mesure (2) est alignée avec l'unité de communication active (32) de l'appareil de cuisson (3), dans lequel les moyens de positionnement comprennent au moins un aimant (22), l'appareil de cuisson (3) comprenant des moyens attirant ledit aimant, de sorte que l'unité de communication passive (21) est alignée avec l'unité de communication active (32) de l'appareil de cuisson (3) lorsque les deux unités de communication se rapprochent l'une de l'autre.

2. Dispositif de mesure selon la revendication 1, dans lequel l'unité de communication passive (21) est une antenne NFC passive.

3. Dispositif de mesure selon la revendication 1 ou 2, dans lequel les moyens de positionnement comprennent un aimant annulaire (22), l'unité de communication passive (21) étant disposée au centre dudit aimant annulaire (22).

4. Dispositif de mesure selon l'une quelconque des revendications précédentes, comprenant un corps injecté sur l'unité de communication passive (21), le corps injecté (24) enveloppant l'unité de communication passive (21) et ledit corps (24) étant relié au capteur de température (20) par un câble (25).

5. Appareil de cuisson comprenant au moins une zone de cuisson (31), et des moyens de transmission sans fil pour recevoir la température mesurée par un dispositif de mesure (2) comprenant au moins un capteur de température (20), dans lequel les moyens de transmission comprennent une unité de communication active (32) disposée dans l'appareil de cuisson (3) configuré pour communiquer avec une unité de communication passive (21) du dispositif de mesure (2), l'unité de communication active (32) produisant un champ électromagnétique pour alimenter ladite unité de communication passive (21), de sorte qu'en conséquence dudit champ électromagnétique le dispositif de mesure (2) peut mesurer la température de cuisson et la transmettre à l'appareil de cuisson (3), **caractérisé en ce que** l'appareil de cuisson (3) comprend des moyens de positionnement configurés pour aligner l'unité de communication passive (21) du dispositif de mesure (2) par rapport à l'unité de communication active (32) de l'appareil de cuisson (3), de sorte à assurer que l'unité de communication passive (21) du dispositif de mesure (2) est alignée avec l'unité de communication active (32) de l'appareil de cuisson (3), dans lequel les moyens de positionnement comprennent au moins un aimant (33), le dispositif de mesure (2) comprenant des moyens attirant ledit aimant (33), de sorte que l'unité de communication passive (21) du dispositif de mesure (2) est alignée avec l'unité de communication active (32) de l'appareil de cuisson (3) lorsque les deux unités de communication se rapprochent l'une de l'autre.

6. Appareil de cuisson selon la revendication 5, dans lequel l'unité de communication active (32) est une antenne NFC active.

7. Appareil de cuisson selon la revendication 5 ou 6, dans lequel les moyens de positionnement comprennent un aimant annulaire (33), l'unité de communication active (32) étant disposée au centre dudit aimant annulaire (33).

8. Appareil de cuisson selon l'une quelconque des revendications 5 à 7, dans lequel l'appareil de cuisson (3) est une table de cuisson comprenant une plaque chauffante (30), les moyens de positionnement et l'unité de communication active (32) étant disposés dans la partie inférieure (30b) de ladite plaque chauffante (30).

9. Système de cuisson comprenant un appareil de cuisson (3) comprenant au moins une zone de cuisson (31), et un dispositif de mesure de température (2) comprenant au moins un capteur de température (20) pour mesurer une température de cuisson, ledit appareil de cuisson (3) et ledit dispositif de mesure (2) comprenant des moyens de transmission sans fil pour transmettre la température mesurée par ledit au moins un capteur de température (20) du dispositif de mesure (2) à l'appareil de cuisson (3), dans lequel les moyens de transmission comprennent une unité de communication active (32) disposée dans l'appareil de cuisson (3) et une unité de communication passive (21) disposée dans le dispositif de mesure (2), les deux unités de communication étant configurées pour communiquer entre elles, l'unité de communication active (32) produisant un champ électromagnétique pour alimenter l'unité de communication passive (21), de sorte qu'en conséquence dudit champ électromagnétique le dispositif de mesure (2) peut mesurer la température de cuisson et la transmettre à l'appareil de cuisson (3), **caractérisé en ce que** le système de cuisson (1) comprend des moyens de positionnement configurés pour aligner l'unité de communication passive (21) par rapport à l'unité de communication active (32), de sorte à assurer que l'unité de communication passive (21) est alignée avec l'unité de communication active (32), dans lequel les moyens de positionnement comprennent des moyens magnétiques disposés dans l'appareil de cuisson (3) et dans le dispositif de mesure (2), de sorte que l'unité de communication passive (21) du dispositif de mesure (2) est alignée avec l'unité de communication active (32) de l'appareil de cuisson (3) lorsque les deux unités de communication se rapprochent l'une de l'autre, les moyens de positionnement comprenant au moins un aimant (33) disposé dans l'appareil de cuisson (3) et au moins un aimant (22) disposé dans le dispositif de mesure (2).

10. Système de cuisson selon la revendication 9, dans lequel l'unité de communication active (32) est une antenne NFC active et l'unité de communication passive (21) est une antenne NFC passive.

11. Système de cuisson selon la revendication 9 ou 10, dans lequel les moyens de positionnement de l'appareil de cuisson (3) comprennent un aimant annulaire (33), l'unité de communication active (32) étant disposée au centre dudit aimant annulaire (33), et les moyens de positionnement du dispositif de mesure (2) comprennent un aimant annulaire (22), l'unité de communication passive (21) étant disposée au centre dudit aimant annulaire (22).
